(19) Europäisches Patentamt / European Patent Office / Office européen des brevets

(11) **EP 3 418 076 B1**

(12) **EUROPÄISCHE PATENTSCHRIFT**

(45) Veröffentlichungstag und Bekanntmachung des Hinweises auf die Patenterteilung:
**04.03.2020  Patentblatt 2020/10**

(51) Int Cl.:
***B60C 11/13*** *(2006.01)*  ***B60C 11/03*** *(2006.01)*

(21) Anmeldenummer: **18165375.9**

(22) Anmeldetag: **03.04.2018**

(54) **FAHRZEUGLUFTREIFEN**

PNEUMATIC TYRES FOR A VEHICLE

PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2017  DE 102017210181**

(43) Veröffentlichungstag der Anmeldung:
**26.12.2018  Patentblatt 2018/52**

(73) Patentinhaber: **Continental Reifen Deutschland GmbH**
**30165 Hannover (DE)**

(72) Erfinder:
- **Behr, Ulrich**
**30167 Hannover (DE)**
- **Oltolina, Davide**
**30163 Hannover (DE)**
- **Buschmeier, Jörg**
**30659 Hannover (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A1- 1 974 957     DE-A1-102006 047 324
DE-A1-102010 016 978     DE-A1-102015 200 207
JP-A- 2011 084 254

**Beschreibung**

Die Erfindung betrifft einen Fahrzeugluftreifen in Radialbauart mit einem Laufstreifen mit zumindest einer schulterseitigen Profilblockreihe, welche über ihre Umfangserstreckung mit einer Vielzahl von Querrillen versehen ist, welche die Profilblockreihe in Schulterblöcke gliedern, wobei in jeder Querrille eine Grundanhebung ausgebildet ist, welche in Umfangsrichtung aufeinanderfolgende Schulterblöcke aneinander anbindet und wobei der Laufstreifen eine Bodenaufstandsfläche mit einer Breite aufweist, deren einer Rand innerhalb der schulterseitigen Profilblockreihe liegt.

Grundanhebungen sind dem Fachmann bekannt. Die Grundanhebung wird beispielsweise ebenfalls als "Verbindungssteg" oder als "Tie Bar" bezeichnet und ist ein Verbindungssteg zwischen zwei in Umfangsrichtung hintereinander angeordneten Profilblöcken und dient der Erhöhung der Stabilität des Laufstreifenprofils im Schulterbereich.

Ein Fahrzeugluftreifen der eingangs genannten Art ist aus der DE 10 2015 200 207 A1 bekannt. Der Laufstreifen des Fahrzeugluftreifens weist eine schulterseitige Profilblockreihe mit Querrillen auf, in welchen jeweils eine die benachbarten Schulterblöcke aneinander anbindende Grundanhebung ausgebildet ist. Die Grundanhebung weist zum Rillengrund der Querrille abfallende, treppenartig gestufte, seitliche Flanken auf. Diese Grundanhebungen sollen neben der Erhöhung der Stabilität der Schulterblöcke ferner einen gewissen Verzahnungseffekt beim Fahren auf weichem Untergrund, beispielsweise auf Schnee, ermöglichen.

Ein weiterer Fahrzeugluftreifen der eingangs genannten Art ist aus der EP 2 338 702 A1 bekannt. Der Laufstreifen dieses Fahrzeugluftreifens weist unterschiedliche Profilstrukturen in den Laufstreifenhälften auf, wobei der Reifen in einen Reifeninnenschulterbereich und in einen Reifenaußenschulterbereich aufgeteilt ist. Im Außenschulterbereich ist in den Querrillen örtlich jeweils eine Grundanhebung ausgebildet, welche die einander zugewandten Quernutflanken zweier hintereinander angeordneter Profilblöcke miteinander verbindet.

Derartige Grundanhebungen haben infolge der größeren Umfangssteifigkeit der schulterseitigen Blöcke positive Auswirkungen auf die Handlingeigenschaften, insbesondere auch bei Kurvenfahrt.

Weitere Fahrzeugluftreifen mit einem Laufstreifen mit einer Profilblockreihen, welche Querrillen mit Grundanhebungen aufweisen, sind beispielsweise aus der EP 1 974 957 A1, der DE 10 2010 016 978 A1 und der JP 2011 084 254 A bekannt. Die Grundanhebungen gemäß der EP 1 974 957 A1 weisen jeweils eine zum Rillengrund der Querrille abfallende, treppenartig gestufte, seitliche Flanke auf, welche sich vorteilhaft auf die Griffeigenschaften auf mit Matsch, Schlamm oder Schnee bedecktem Untergrund auswirken sol. Die in der DE 10 2010 016 978 A1 in Querrillen vorgesehenen Grundanhebungen weisen jeweils an die Profilblöcke angrenzende Seitenteile und einen zwischen diesen befindlichen Basisteil auf, wobei diese Teile eine sattelförmige Vertiefung an der jeweiligen Grundanhebung mitbilden. Solche Grundanhebungen sollen eine gute Querentwässerung ermöglichen. Die aus der JP 2011 084 254 A bekannten Grundanhebungen sind in der Erstreckungsrichtung der Querrille mit einer Vertiefung versehen und sollen eine gute Fahrstabilität auf eisigem Untergrund und einen gleichmäßigen Laufstreifenabrieb ermöglichen.

Der Erfindung liegt die Aufgabe zu Grunde, einen Fahrzeugluftreifen der eingangs genannten Art derart auszuführen, dass dessen Handlingeigenschaften, insbesondere bei Kurvenfahrt bei hoher Geschwindigkeit weiter verbessert sind.

Die gestellte Aufgabe wird erfindungsgemäß dadurch gelöst, dass die Grundanhebung, im Längsschnitt der Querrille betrachtet, zumindest über den Großteil ihrer Erstreckung eine radial nach außen gebogen verlaufende Oberfläche aufweist, welche von in der Grundanhebung ausgebildeten Nuten unterbrochen ist, wobei die Nuten parallel zueinander und unter einen Winkel von 0° bis 20° zur Umfangsrichtung des Fahrzeugluftreifens verlaufen.

Gemäß der Erfindung ist in jeder Querrille wenigstens einer schulterseitigen Profilblockreihe, vorzugsweise der außenschulterseitigen Profilblockreihe, eine Grundanhebung ausgebildet, dessen Oberfläche durch parallele Nuten profiliert ausgebildet ist. Diese zusätzliche Profilierung der Grundanhebung bewirkt zwei Vorteile. Ein erster Vorteil ist darin zu sehen, dass durch die profilierte Oberfläche der Grundanhebung durch etwa in Umfangsrichtung ausgerichtete Nuten zusätzliche Kanten zur Verfügung gestellt sind, welche die Quertraktion insbesondere bei Kurvenfahrten bei hoher Geschwindigkeit signifikant verbessert. Ein zweiter Vorteil ist darin zu sehen, dass die Oberfläche der Grundanhebung durch die Profilierung vergrößert ist, wodurch die Wärmeabführung und somit die Kühlwirkung verbessert ist. Die Gefahr von sogenannten "Auskochungen" ist verringert.

Im Bereich der radial nach außen gebogen verlaufenden Oberfläche treten insbesondere bei Kurvenfahrt große Kräfte auf, so dass durch die vorgenannte Querschnittsgeometrie der Grundanhebung eine mögliche Kerbwirkung reduziert wird. Zudem wird die Entwässerung der Querrillen verbessert.

In einer bevorzugten Ausführung der Erfindung liegt die Grundanhebung auf dem Rand der Bodenaufstandsfläche. Alternativ befindet sich das laufstreifenaußenseitige Ende der Grundanhebung entweder am Rand der Bodenaufstandsfläche oder vom Rand der Bodenaufstandsfläche in einem in axialer Richtung gemessenen Abstand von bis zu 1% der Breite der Bodenaufstandsfläche. Durch die Anordnung der Grundanhebung im Bereich des Randes der Breite der Bodenaufstandsfläche ist die Schulterblockreihe wirkungsvoll versteift und bei Kurvenfahrten bei hoher Geschwindigkeit kommt die profilierte Grundanhebung in Kontakt mit der Oberfläche der Fahrbahn/des Untergrundes und verbessert die Quertraktion. Insbesondere bei tiefen Untergründen wie bei Schlamm ist die Quertraktion verbessert. Bei winterlichen Verhältnissen wird der Schnee besser in der Querrille gehalten, wodurch die Schnee-Schnee-Reibung verbessert ist.

Besonders vorteilhaft ist es, wenn der Abstand bis zu 0,5%, insbesondere 0,5%, der Breite der Bodenaufstandsfläche beträgt. Durch die Anordnung der Grundanhebung im Bereich des Randes der Breite der Bodenaufstandsfläche ist die Schulterblockreihe besonders wirkungsvoll versteift und bei Kurvenfahrten bei hoher Geschwindigkeit kommt die profilierte Grundanhebung in optimalen Kontakt mit der Fahrbahnoberfläche. Hierdurch ist der beste Kompromiss zwischen Querentwässerung und Erhöhung der Stabilität des Laufstreifenprofils im Schulterbereich erhalten.

Zweckmäßig ist es, wenn Nuten eine Tiefe von 0,4 bis 1,2 mm, bevorzugt von 0,7 bis 0,9 mm, besonders bevorzugt von 0,8 mm, aufweisen. Eine vorgenannte Tiefe der Nuten ist gut produzierbar und bildet einen Kompromiss auf hohem Niveau zwischen Höhe der Grundanhebung und verbesserter Traktion.

Zweckmäßig ist es, wenn die Nuten eine Breite von 0,5 bis 1,4 mm, bevorzugt von 0,9 bis 1,1 mm, besonders bevorzugt von 1 mm, aufweisen. Eine vorgenannte Breite der Nuten ist gut produzierbar und bildet einen Kompromiss auf hohem Niveau zwischen Höhe der Grundanhebung und verbesserter Traktion.

Die versteifende Wirkung der am Rand der Bodenaufstandsfläche positionierten Grundanhebung auf die schulterseitige Profilblockreihe ist besonders vorteilhaft, wenn die Grundanhebung an ihrer Basis in axialer Richtung eine Breite von 8,3% bis 9,2%, insbesondere von 8,7% bis 8,9%, der Breite der Bodenaufstandsfläche aufweist. Insbesondere für die erwähnte versteifende Wirkung bei Kurvenfahrt sind Grundanhebungen mit einer solchen Breite von Vorteil.

Vorteilhaft ist es, wenn die Außenkontur der Grundanhebung - in deren Längsschnitt betrachtet - einen zur Laufstreifenmitte weisenden Abschnitt aus einem oder aus mehreren Radien aufweist und einen mittigen, parallel zur mantelförmigen Laufstreifenoberfläche ausgebildeten Abschnitt aufweist, in welche die Nuten eingebracht sind und wenn die Außenkontur einen dritten Abschnitt aufweist, welcher zur Laufstreifenaußenseite weist und in einer Geraden am Rillengrund endet, wobei die Gerade mit der radialen Richtung einen Winkel zwischen 40° und 50°, vorzugsweise von etwa 45°, einschließt. In diesem Bereich treten insbesondere bei Kurvenfahrt große Kräfte auf, so dass durch die vorgenannte Querschnittsgeometrie der Grundanhebung eine mögliche Kerbwirkung reduziert wird. Zudem wird die Entwässerung der Querrillen verbessert.

Eine weitere bevorzugt Ausführung ist dadurch gekennzeichnet, dass die Grundanhebung an ihrer höchsten Stelle eine radiale Höhe in Millimeter aufweist, welche der Bedingung

$$\frac{T_1[mm]}{2} \leq T[mm] \leq T_1[mm] - 0{,}5$$

entspricht, entspricht, wobei $T_1[mm]$ die maximale Profiltiefe der Querrille (5) in Millimeter und $T[mm]$ die radiale Höhe der Grundanhebung (6) in Millimeter ist. Grundanhebungen, welche die Tiefe derart verringern, versteifen die Profilblockreihe auf eine für den Abrieb vorteilhafte Weise.

Weitere Merkmale, Vorteile und Einzelheiten der Erfindung werden nun anhand der Zeichnungen, welche schematisch ein Ausführungsbeispiel der Erfindung zeigen, näher erläutert. Dabei zeigen die

Fig. 1 eine vereinfachte Draufsicht auf einen Umfangsabschnitt eines Laufstreifens eines Fahrzeugluftreifens mit einer Ausführungsvariante der Erfindung und

Fig. 2 einen Schnitt entlang der Linie I-I der Fig. 1,

Fig. 3 eine Vergrößerung eines Ausschnitts der Grundanhebung der Fig. 2.

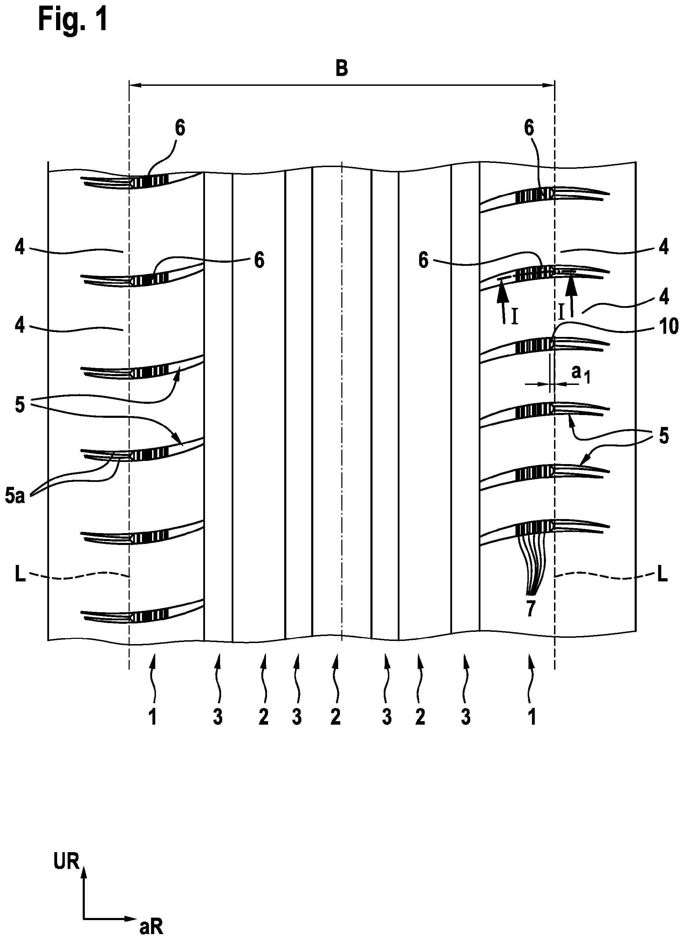

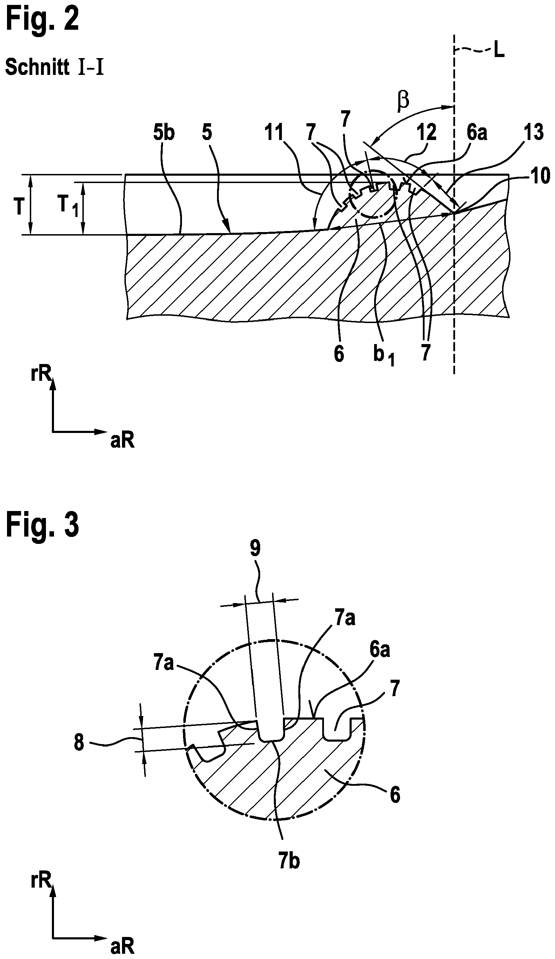

Die **Fig. 1** zeigt eine Draufsicht auf einen Umfangsabschnitt eines Laufstreifens eines erfindungsgemäßen Fahrzeugluftreifens in Radialbauart für Personenkraftwagen, Vans oder Light-Trucks. Der Laufstreifen ist profiliert und weist in jeder Schulter eine schulterseitige Profilblockreihe 1 und im mittigen Bereich des Laufstreifens Laufstreifenbänder 2 auf, welche durch Umfangsrillen 3 voneinander und von den schulterseitigen Profilblockreihen 1 begrenzt sind. Die Profilblöcke 4 der Schulter sind durch eine Vielzahl von über den Rand der Bodenaufstandsfläche hinausverlaufenden Querrillen 5 voneinander getrennt, so dass die Profilblöcke 1 der Reifenschulter in Umfangsrichtung UR hintereinander angeordnet sind. Die Ränder der Bodenaufstandsfläche des Laufstreifens sind in Fig. 1 und Fig. 2 jeweils durch eine gestrichelte Linie L gekennzeichnet, wobei die Bodenaufstandsfläche dem statisch ermittelten Footprint (Last bei 70 % der maximalen Tragfähigkeit bei einem Innendruck von 85 % nach E.T.R.T.O.-Norm) entspricht. Die Bodenaufstandsfläche wird auch als TW45 bezeichnet. Die Bodenaufstandsfläche weist in axialer Richtung aR eine Breite B auf (Fig. 1) und endet in bekannter Weise als über den Laufstreifen umlaufender Rand L in den schulterseitigen Profilblockreihen 1. Die schulterseitigen Profilblockreihen 1 liegen somit teilweise innerhalb der Bodenaufstandsfläche und teilweise außerhalb der Bodenaufstandsfläche.

Die Querrillen 5 sind in Draufsicht parallel zueinander sowie leicht bogenförmig verlaufend. Die Querrillen 5 können in Draufsicht auch gerade sowie ferner in axialer Richtung oder unter einem von der axialen Richtung um bis zu 35° abweichenden Winkel verlaufen. An der Oberfläche der außerhalb der Bodenaufstandsfläche befindlichen Schulterblöcken sind die Querrillen 5 in Umfangsrichtung jeweils durch zwei Rillenkanten 5a begrenzt, welche bis zur Umfangsrille 2 sowie beim gezeigten Ausführungsbeispiel in Draufsicht parallel zueinander verlaufen. Die Rillenkanten 5a können in an sich bekannter Weise angefast sein.

In jeder Querrille 5 ist eine Grundanhebung 6 ausgebildet, welche in Umfangsrichtung UR aufeinanderfolgende Schulterblöcke 4 aneinander anbindet. Die Grundanhebungen 6 sind derart in den Querrillen 5 positioniert, dass sie in Umfangsrichtung UR miteinander fluchten. Auf der Oberfläche 6a der Grundanhebung sind Nuten 7 angeordnet, welche parallel und beabstandet zueinander ausgebildet sind und welche in Umfangsrichtung UR des Laufstreifens verlaufen (**Fig. 2, Fig. 3**). Die Nuten 7 können in anderen Ausführungen der Erfindung mit der Umfangsrichtung des Fahrzeugluftreifens einen Winkel $\alpha$ einschließen, welcher in einem Bereich von 0° bis 20° liegt. Die Nuten 7 weisen eine Tiefe 8 von 0,7 bis 0,9 mm, bevorzugt von 0,8 mm auf. Die Breite 9 der Nuten beträgt 0,9 - 1,1 mm, bevorzugt 1 mm. Die einander zugewandten Flanken 7a zweier benachbarter Nuten 7 sind mindestens 0,5 bis 1,5 mm, bevorzugt 1 mm voneinander beabstandet. Die beiden Flanken 7a einer Nut 7 gehen mittels Radien in den Nutgrund 7b über. Der Nutgrund 7b ist etwa parallel zur Außenkontur / Einhüllenden der Grundanhebung 6 ausgebildet. Die Rillenflanken 7a stehen etwa senkrecht auf der Außenkontur / Einhüllenden der Grundanhebung 6.

Die Gundanhebungen 6 sind innerhalb der Bodenaufstandsfläche angeordnet, so dass das laufstreifenaußenseitiges Ende der Grundanhebung 10 vom Rand L der Bodenaufstandsfläche in einem in axialer Richtung aR gemessenen Abstand $a_1$ von 0,5 % der Breite B der Bodenaufstandsfläche befindet. Die Grundanhebung 6 weist an ihrer Basis in Längsrichtung der Querrille 5 eine Breite b1 von 8,3% bis 9,2%, insbesondere von 8,7% bis 8,9%, der Breite B der Bodenaufstandsfläche auf. Jede Querrille 5 weist einen Rillengrund 5b sowie an ihrer tiefsten Stelle in radialer Richtung eine Tiefe $T_1$ (Fig. 2) von 6,0 mm bis 9,0 mm auf, wobei die Tiefe $T_1$ beim gezeigten Ausführungsbeispiel der jeweils vorgesehenen Profiltiefe des Laufstreifens und damit der Tiefe der Umfangsrille 2 entspricht. Die Grundanhebung 6 weist an ihrer höchsten Stelle eine radiale Höhe T auf, welche der Bedingung $T_1$mm - (0,5mm bis $T_1$mm/2), bevorzugt $T_1$mm - 1,2mm entspricht. Durch die Grundanhebung 6 ist die Tiefe jeder Querrille 5 in radialer Richtung rR lokal bis auf eine Tiefe $T_2$ (Fig. 2) verringert, welche 1,0 mm bis 1,4 mm, insbesondere 1,1 mm bis 1,3 mm, und besonders bevorzugter Weise 1,2 mm beträgt.

Die Außenkontur der Grundanhebung - in deren Längsschnitt betrachtet - weist drei Abschnitte 11, 12, 13 auf: einen zur Laufstreifenmitte weisenden ersten Abschnitt 11, einen mittigen, zweiten Abschnitt 12 und einen zur Laufstreifenaußenseite weisenden dritten Abschnitt 13. Der zur Laufstreifenmitte weisende Abschnitt 11 ist aus einem oder aus mehreren Radien gebildet und geht in den zweiten Abschnitt 12, den mittigen Abschnitt der Grundanhebung 6 über. Dieser mittige, zweite Abschnitt 12 bildet eine Deckfläche, welche etwa konturparallel zur mantelförmigen Laufstreifenfläche ausgebildet ist. Der dritte Abschnitt 13 ist als Gerade ausgebildet, welche im Rillengrund 5b endet. Die Gerade schließt mit der radialen Richtung rR einen Winkel $\beta$ zwischen 43° und 47° ein. Zwischen dem zweiten Abschnitt und dem dritten Abschnitt 12 kann ein Übergangsbereich ausgebildet sein. Die Nuten 7 sind in dem ersten und zweiten Abschnitt 11, 12 der Grundanhebung 6 angeordnet, der dritte Abschnitt 13 weist keine oder nur wenige Nuten 7 auf.

## Bezugszeichenliste

   1 Profilblockreihe

   2 Laufstreifenband

   3 Umfangsrille

   4 Profilblock / Schulterblock

   5 Querrille

   5a Rillenkante der Querrille

   5b Rillengrund der Querrille

   6 Grundanhebung

   6a Oberfläche der Grundanhebung

   7 Nut

   7a Nutflanke

   7b Nutgrund

   8 Tiefe der Nut

   9 Breite der Nut

   10 laufstreifenaußenseitiges Ende der Grundanhebung

   11 erster Abschnitt der Grundanhebung

   12 zweiter Abschnitt der Grundanhebung

   13 dritter Abschnitt der Grundanhebung

   L Rand der Bodenaufstandsfläche

   B Breite der Bodenaufstandsfläche

T Höhe der Grundanhebung

$a_1$ Abstand des laufstreifenaußenseitigen Endes der Grundanhebung zum Rand

$b_1$ Länge der Grundanhebung

$T_1$ maximale Profiltiefe der Querrille

$\alpha$, $\beta$ Winkel

**Patentansprüche**

1. Fahrzeugluftreifen in Radialbauart mit einem Laufstreifen mit zumindest einer schulterseitigen Profilblockreihe (1), welche über ihre Umfangserstreckung mit einer Vielzahl von Querrillen (5) versehen ist, welche die Profilblockreihe (1) in Schulterblöcke (4) gliedern, wobei in jeder Querrille (5) eine Grundanhebung (6) ausgebildet ist, welche in Umfangsrichtung aufeinanderfolgende Schulterblöcke (4) aneinander anbindet und wobei der Laufstreifen eine Bodenaufstandsfläche mit einer Breite (B) aufweist, deren einer Rand (L) innerhalb der schulterseitigen Profilblockreihe (1) liegt, **dadurch gekennzeichnet, dass** die Grundanhebung (6), im Längsschnitt der Querrille (5) betrachtet, zumindest über den Großteil ihrer Erstreckung eine radial nach außen gebogen verlaufende Oberfläche aufweist, welche von in der Grundanhebung (6) ausgebildeten Nuten (7) unterbrochen ist, wobei die Nuten (7) parallel zueinander und unter einen Winkel ($\alpha$) von 0° bis 20° zur Umfangsrichtung (UR) des Fahrzeugluftreifens verlaufen.

2. Fahrzeugluftreifen nach Anspruch 1, **dadurch gekennzeichnet, dass** die Gundanhebung (6) auf dem Rand (L) der Bodenaufstandsfläche liegt oder alternativ dass das laufstreifenaußenseitiges Ende (10) der Grundanhebung (6) sich entweder am Rand (L) der Bodenaufstandsfläche oder vom Rand (L) der Bodenaufstandsfläche in einem in axialer Richtung (aR) gemessenen Abstand ($a_1$) von bis zu 1% der Breite (B) der Bodenaufstandsfläche befindet.

3. Fahrzeugluftreifen nach Anspruch 2, **dadurch gekennzeichnet, dass** der Abstand ($a_1$) bis zu 0,5%, insbesondere 0,5%, der Breite (B) der Bodenaufstandsfläche beträgt.

4. Fahrzeugluftreifen nach einem oder mehreren der vorangehenden Ansprüche, **dadurch gekennzeichnet, dass** die Nuten (7) eine Tiefe (8) von 0,4 bis 1,2 mm, bevorzugt von 0,7 bis 0,9 mm, besonders bevorzugt von 0,8 mm, aufweisen.

5. Fahrzeugluftreifen nach einem oder mehreren der vorangehenden Ansprüche, **dadurch gekennzeichnet, dass** die Nuten (7) eine Breite (9) von 0,5 bis 1,4 mm, bevorzugt von 0,9 bis 1,1 mm, besonders bevorzugt von 1 mm, aufweisen.

6. Fahrzeugluftreifen nach einem oder mehreren der vorangehenden Ansprüche, **dadurch gekennzeichnet, dass** die Grundanhebung (6) an ihrer Basis in Längsrichtung der Querrille eine Breite ($b_1$) von 8,3% bis 9,2%, insbesondere von 8,7% bis 8,9%, der Breite (B) der Bodenaufstandsfläche aufweist.

7. Fahrzeugluftreifen nach einem oder mehreren der vorangehenden Ansprüche, **dadurch gekennzeichnet, dass** die Außenkontur der Grundanhebung (6) - in deren Längsschnitt betrachtet - aus drei Abschnitten (11, 12, 13) gebildet ist, einen ersten Abschnitt (11), welcher zur Laufstreifenmitte weist und aus einem oder aus mehreren Radien gebildet ist, einem zweiten, mittig Abschnitt (12) der Grundanhebung (6), welcher konturparallel zur mantelförmigen Laufstreifenfläche verläuft und einem dritten, zur Laufstreifenaußenseite weisenden Abschnitt (13/10), welcher als Gerade im Rillengrund (5b) endet, wobei die Gerade (13) mit der radialen Richtung (rR) einen Winkel ($\beta$) zwischen 35° und 55°, vorzugsweise zwischen 43° und 47°, einschließt.

8. Fahrzeugluftreifen nach einem oder mehreren der vorangehenden Ansprüche, **dadurch gekennzeichnet, dass** die Grundanhebung (6) an ihrer höchsten Stelle eine radiale Höhe (T) in Millimeter aufweist, welche der Bedingung

$$\frac{T_1[mm]}{2} \leq T[mm] \leq T_1[mm] - 0,5$$

entspricht, wobei $T_1[mm]$ die maximale Profiltiefe der Querrille (5) in Millimeter und $T[mm]$ die radiale Höhe der Grundanhebung (6) in Millimeter ist.

**Claims**

1. Pneumatic vehicle tyre of radial type, having a tread with at least one shoulder-side profile block row (1), which is provided along its circumferential extent with a multiplicity of transverse channels (5) that subdivide the profile block row (1) into shoulder blocks (4), wherein a bottom elevation (6) is formed in each transverse channel (5), said bottom elevation (6) attaching shoulder blocks (4) that follow one another in the circumferential direction to one another, and wherein the tread has a ground contact patch with a width (B), the edge (L) of which lies within the shoulder-side profile block row (1),
**characterized**
**in that** the bottom elevation (6), when the transverse channel (5) is seen in longitudinal section, has, at least along the majority of its extent, a surface that extends in a radially outwardly curved manner and is interrupted by grooves (7) formed in the bottom elevation (6), wherein the grooves (7) extend parallel to one another and at an angle ($\alpha$) of 0° to 20° to the circumferential direction (UR) of the pneumatic vehicle tyre.

2. Pneumatic vehicle tyre according to Claim 1, **characterized in that** the bottom elevation (6) is located on the edge (L) of the ground contact patch, or alternatively **in that** that end (10) of the bottom elevation (6) that is on the outer side of the tread is located either at the edge (L) of the ground contact patch or is at a distance ($a_1$), measured in an axial direction (aR), from the edge (L) of the ground contact patch of up to 1% of the width (B) of the ground contact patch.

3. Pneumatic vehicle tyre according to Claim 2, **characterized in that** the distance ($a_1$) measures up to 0.5%, in particular 0.5%, of the width (B) of the ground contact patch.

4. Pneumatic vehicle tyre according to one or more of the preceding claims, **characterized in that** the grooves (7) have a depth (8) of 0.4 to 1.2 mm, preferably of 0.7 to 0.9 mm, particularly preferably of 0.8 mm.

5. Pneumatic vehicle tyre according to one or more of the preceding claims, **characterized in that** the grooves (7) have a width (9) of 0.5 to 1.4 mm, preferably of 0.9 to 1.1 mm, particularly preferably of 1 mm.

6. Pneumatic vehicle tyre according to one or more of the preceding claims, **characterized in that** the bottom elevation (6) has, at its base, in the longitudinal direction of the transverse channel a width ($b_1$) of 8.3% to 9.2%, in particular of 8.7% to 8.9%, of the width (B) of the ground contact patch.

7. Pneumatic vehicle tyre according to one or more of the preceding claims, **characterized in that** the outer contour of the bottom elevation (6) - when the latter is seen in longitudinal section - is formed from three portions (11, 12, 13), a first portion (11) that is directed towards the tread centre and is formed from one or more radii, a second, central portion (12) of the bottom elevation (6), which extends in a contour-parallel manner to the casing-like tread surface, and a third portion (13/10) that faces towards the tread outer side and ends as a straight line in the channel bottom (5b), wherein the straight line (13) encloses an angle ($\beta$) of between 35° and 55°, preferably between 43° and 47°, with the radial direction (rR).

8. Pneumatic vehicle tyre according to one or more of the preceding claims, **characterized in that** the bottom elevation (6) has, at its highest point, a radial height (T) in millimetres that complies with the condition

$$\frac{T_1[mm]}{2} \le T[mm] \le T_1[mm] - 0.5$$

wherein $T_1[mm]$ is the maximum profile depth of the transverse channel (5) in millimetres and T[mm] is the radial height of the bottom elevation (6) in millimetres.

**Revendications**

1. Pneumatique de véhicule de structure radiale comprenant une bande de roulement pourvue d'au moins une rangée de blocs de profil (1) côté épaulement qui est pourvue sur son extension circonférentielle d'une pluralité de rainures transversales (5) qui structurent la rangée de blocs de profil (1) en blocs d'épaulement (4), dans chaque rainure transversale (5), une élévation de base (6) étant réalisée, laquelle relie les blocs d'épaulement (4) successifs dans la direction circonférentielle les uns aux autres et la bande de roulement comportant une surface de contact au sol d'une largeur (B), dont un bord (L) se trouve à l'intérieur de la rangée de blocs de profil (1) côté épaulement,
**caractérisé en ce que**
l'élévation de base (6) comporte, dans une vue en coupe longitudinale de la rainure transversale (5), au moins sur la majeure partie de son extension, une surface incurvée radialement vers l'extérieur qui est interrompue par des rainures (7) formées dans l'élévation de base (6), les rainures (7) s'étendant parallèlement les unes aux autres et suivant un angle ($\alpha$) de 0° à 20° par rapport à la direction circonférentielle (UR) du pneumatique de véhicule.

2. Pneumatique de véhicule selon la revendication 1, **caractérisé en ce que** l'élévation de base (6) est située sur le bord (L) de la surface de contact au sol ou en variante **en ce que** l'extrémité (10) de l'élévation de base (6), du côté extérieur de la bande de roulement, est située soit au niveau du bord (L) de la surface de contact au sol, soit à une distance ($a_1$), mesurée dans la direction axiale (aR) et pouvant atteindre 1 % de la largeur (B) de la surface de contact au sol, du bord (L) de la surface de contact au sol.

3. Pneumatique de véhicule selon la revendication 2, **caractérisé en ce que** la distance ($a_1$) atteint jusqu'à 0,5 %, notamment est de 0,5 %, de la largeur (B) de la surface de contact au sol.

4. Pneumatique de véhicule selon l'une au moins des revendications précédentes, **caractérisé en ce que** les rainures (7) ont une profondeur (8) de 0,4 à 1,2 mm, de préférence de 0,7 à 0,9 mm, de manière particulièrement préférée de 0,8 mm.

5. Pneumatique de véhicule selon l'une au moins des revendications précédentes, **caractérisé en ce que** les rainures (7) ont une largeur (9) de 0,5 à 1,4 mm, de préférence de 0,9 à 1,1 mm, de manière particulièrement préférée de 1 mm.

6. Pneumatique de véhicule selon l'une au moins des revendications précédentes, **caractérisé en ce que** l'élévation de base (6) a, au niveau de sa base dans la direction longitudinale de la rainure transversale, une largeur ($b_1$) de 8,3 % à 9,2 %, notamment de 8,7 % à 8,9 %, de la largeur (B) de la surface de contact au sol.

7. Pneumatique de véhicule selon l'une au moins des revendications précédentes, **caractérisé en ce que** le contour extérieur de l'élévation de base (6), en coupe longitudinale, est formé de trois portions (11, 12, 13), une première portion (11) qui pointe vers le milieu de la bande de roulement et qui est formée d'au moins un rayon, une deuxième portion centrale (12) de l'élévation de base (6) qui s'étend parallèlement au contour de la surface de la bande de roulement en forme d'enveloppe et une troisième portion (13/10) qui pointe vers le côté extérieur de la bande de roulement et qui se termine par une ligne droite dans le fond de rainure (5b), la ligne droite (13) formant avec la direction radiale (rR) un angle ($\beta$) compris entre 35° et 55°, de préférence entre 43° et 47°.

8. Pneumatique de véhicule selon l'une au moins des revendications précédentes, **caractérisé en ce que** l'élévation de base (6) a, à son point le plus élevé, une hauteur radiale (T) en millimètres qui correspond à la condition

$$\frac{T_1[mm]}{2} \leq T[mm] \leq T_1[mm] - 0,5$$

$T_1[mm]$ étant la profondeur de profil maximale de la rainure transversale (5) en millimètres et T[mm] étant la hauteur radiale de l'élévation de base (6) en millimètres.

# Fig. 1

# Fig. 2

**Schnitt** I-I

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015200207 A1
- EP 2338702 A1
- EP 1974957 A1
- DE 102010016978 A1
- JP 2011084254 A